# EUROPÄISCHE PATENTSCHRIFT

(11) **EP 4 093 628 B1**
(45) Veröffentlichungstag und Bekanntmachung des Hinweises auf die Patenterteilung: **07.02.2024**
(21) Anmeldenummer: 20838510.4
(22) Anmeldetag: 21.12.2020
(51) Int. Cl.: B60K 35/00, B60K 37/06, B60R 11/02, B60R 11/00

(54) **DISPLAYSYSTEM MIT HAPTISCHER RÜCKMELDUNG**
DISPLAY SYSTEM WITH HAPTIC FEEDBACK
SYSTÈME D'AFFICHAGE À RETOUR HAPTIQUE

(30) Priorität: 20.01.2020 DE 102020101145
(43) Veröffentlichungstag der Anmeldung: 30.11.2022
(73) Patentinhaber: Audi AG, 85045 Ingolstadt (DE)
(72) Erfinder: MÜLLER, Ulrich, 85055 Ingolstadt (DE)
(74) Vertreter: RDL Patentanwälte PartG mbB
(86) Internationale Anmeldenummer: PCT/EP2020/087420
(87) Internationale Veröffentlichungsnummer: WO 2021/148212

(56) Entgegenhaltungen:
- WO-A1-2012/079764
- US-A1- 2012 306 910
- US-B2- 9 860 474

## Beschreibung

Die vorliegende Erfindung betrifft ein Displaysystem umfassend ein Display mit einem flexiblen Touchscreen, ein Gehäuse und einen Motor mit einer elektrischen Ansteuerung, wobei das Display über die elektrische Ansteuerung des Motors aus dem Gehäuse ausfahrbar ist, wobei der Motor eingerichtet ist, eine Biegung bzw. Aufrollbewegung des Displays zu erzeugen, wobei die Biegung bzw. die Aufrollbewegung beim Ausfahren des Displays in eine translatorische Bewegung des Displays umgewandelt wird und wobei der Motor eingerichtet ist, eine haptische Rückmeldung zu erzeugen.

Im Stand der Technik wird zur Unterstützung der Bedienung von Touchscreens bzw. Touchpads häufig ein "Force Feedback" eingesetzt. Dabei bekommt ein Nutzer eine haptische Rückmeldung bei der Bedienung eines Touchscreens eines Displays. Bei der Bedienung des Touchscreens, die in der Regel eine Berührung bzw. eine Betätigung ist, vibriert der Touchscreen bzw. bewegt sich der Touchscreen mechanisch leicht, um eine haptische Rückmeldung zu erzeugen. Dieser Haptik-Impuls wird von einem Aktuator, beispielsweise einem Motor, einem Elektromagnet, einem PiezoElement oder einem Elektropolymer erzeugt.

Weiterhin sind im Stand der Technik flexible Displays bekannt, welche gebogen bzw. gerollt werden können. Das Ausfahren der Displays erfolgt dabei in der Regel mittels eines Motors.

Aus dem Dokument WO 2016/142373 A1 ist ein Bedienelement eines Kraftfahrzeugs mit einer von einer Detektionseinrichtung abhängigen haptischen Rückmeldung bekannt. Das Bedienelement weist ein Betätigungsteil auf, auf das ein Aktor wirkt, der zur Erzeugung der haptischen Rückmeldung dient, wobei eine Stärke eines elektrischen Anregungssignals zum Antreiben des Aktors in Abhängigkeit von verschiedenen Betätigungsrichtungen des Betätigungsteils angepasst wird.

Aus dem Dokument US 2017/021762 A1 sind ein haptisches System eines Fahrzeugs und ein Verfahren zum Steuern des haptischen Systems bekannt. Das haptische System weist eine berührungsempfindliche Anzeigefläche auf, die zur Ausgabe einer haptischen Rückmeldung an einen Insassen dient, wobei eine Intensität der haptischen Rückmeldung in Abhängigkeit von einer erfassten Fahrzeugvibration eingestellt wird.

Aus dem Dokument DE 10 2015 016 499 B3 sind eine Bedienvorrichtung für ein Kraftfahrzeug mit einfahrbarem Berührungsbildschirm sowie Kraftfahrzeug und Verfahren hierzu bekannt. Der Berührungsbildschirm ist von einem eingefahrenen Zustand in einen ausgefahrenen Zustand überführbar und weist einen Aktor auf, der unabhängig von dem Zustand der Bedienvorrichtung eine haptische Rückmeldung am Berührungsbildschirm bereitstellt.

Die US 2012/306910 A1 betrifft ein mobiles Endgerät zum Datenschutz und Teilen eines 3D-Bildes, das auf einer flexiblen Anzeige angezeigt wird, und ein Verfahren zum Anzeigen eines 3D-Bilds. In einem Datenschutzmodus wird die flexible Anzeige gefaltet oder gerollt, um die Anzeige eines Anzeigebereichs eines 3D-Bilds und die Anzeige des 3D-Bilds zu steuern, und in einem Freigabemodus wird ein Bild wie etwa ein PIP oder dergleichen darauf angezeigt. Ein gefalteter Anzeigebereich oder ein 3D-Bild wird drehbar angezeigt, wodurch effektiv ein Privatmodus und ein Freigabemodus auf der flexiblen Anzeige implementiert werden.

Die US 9 860 474 B2 offenbart ein Multimediagerät mit einer flexiblen Anzeige und ein Steuerverfahren dafür. Das Gerät umfasst eine Führungsstange, ein flexibles Display, das auf einen Außenumfang der Führungsstange aufgerollt werden kann, wobei das flexible Display einen ersten Bereich aufweist, der auf den Außenumfang der Führungsstange aufgerollt ist, und einen zweiten Bereich, der nicht auf dem Außenumfang der Führungsleiste aufgerollt ist, eine Empfangseinheit, die dazu konfiguriert ist, einen Inhalt und Metadaten entsprechend dem Inhalt von einer Quellvorrichtung zu empfangen, und eine Steuereinheit, die eine vertikale Breite des zweiten Bereichs der flexiblen Anzeige gemäß einer voreingestellten Bedingung anpasst.

Die WO 2012/079764 A1 beschreibt eine Anzeigevorrichtung mit einem Display in Form eines Zylinders, und mit mindestens einem Lagesensor und/oder Beschleunigungssensor, welcher eine von einem Benutzer des Displays vorgenommene Bewegung oder Lageänderung des Displays erfasst, wobei der Lagesensor und/oder Beschleunigungssensor sowie das Display mit einer Rechnereinheit verbunden ist, welche basierend auf der Information des Lagesensors und/oder Beschleunigungssensors die erfasste Lageänderung des Displays ermittelt und wobei die Rechnereinheit eine vorbestimmte Inhaltsänderung des Displays basierend auf der Lageänderung errechnet und an das Display übermittelt.

Bei einem rollbaren, flexiblen Display, welches als Touchscreen genutzt wird, ist die Erzeugung einer haptischen Rückmeldung schwierig. Der Impuls des Aktuators wirkt auf das gesamte Display, unabhängig davon wie weit das Display ausgefahren ist. Ein Teil des Impulses, der in das Display eingeleitet wird, wird durch den mechanischen Aufbau in eine Verformung des Displays und nur ein Teil in die gewünschte translatorische Bewegung umgewandelt. Diese Aufteilung hängt dabei von der Größe des ausfahrenden Bereiches ab.

Je weiter das Display ausgefahren ist, umso größer wird der Anteil, welcher in eine translatorische Bewegung umgewandelt wird. Das bedeutet, dass bei gleicher Ansteuerung des Motors der Nutzer bei einem zum Teil eingefahrenen Display eine weniger haptische Rückmeldung spüren wird, als bei einem ausgefahrenen Display.

Aufgabe der vorliegenden Erfindung ist es daher, ein flexibles Displaysystem mit einer verbesserten haptischen Rückmeldung bereitzustellen.

Diese Aufgabe wird durch ein Displaysystem mit den Merkmalen des Anspruch 1 gelöst. Vorteilhafte Weiterbildungen und Ausführungen sind Gegenstand der Beschreibung und Beschreibung der Figuren.

Gegenstand der vorliegenden Erfindung ist ein Displaysystem umfassend ein Display mit einem flexiblen Touchscreen, ein Gehäuse und einen Motor mit einer elektrischen Ansteuerung, wobei das Display über die elektrische Ansteuerung des Motors aus dem Gehäuse ausfahrbar ist, wobei der Motor eingerichtet ist, eine Biegung bzw. Aufrollbewegung des Displays zu erzeugen, wobei die Biegung bzw. die Aufrollbewegung beim Ausfahren des Displays in eine translatorische Bewegung des Displays umgewandelt wird und wobei der Motor eingerichtet ist, eine haptische Rückmeldung zu erzeugen.

Erfindungsgemäß umfasst das Displaysystem eine Elektronikeinheit, die eingerichtet ist, eine Berührung des Touchscreens zu erfassen und basierend auf der erfassten Berührung einen elektrischen Haptik-Impuls auszulösen, wobei der Haptik-Impuls eine impulsartige Haptik-Ansteuerung des Motors auslöst. Dies bietet den Vorteil, dass unabhängig von einem ausgefahrenen Displaybereich bzw. einem Ausfahrweg des Displays ein homogener Haptik-Impuls erzeugt werden kann.

Die Elektronikeinheit ist somit eingerichtet, eine Berührung oder Betätigung des flexiblen Touchscreens zu erfassen und einen Haptik-Impuls auszugeben. Die Elektronikeinheit ist ferner eingerichtet, basierend auf diesem Haptik-Impuls eine Bestromung und somit eine elektrische Haptik-Ansteuerung des Motors auszuführen.

Die Haptik-Ansteuerung ist in der Regel impulsartig. Impulsartig bedeutet dabei, dass der Motor durch die Haptik-Ansteuerung kurzzeitig wechselseitig bestromt wird.

In einer Ausführungsform ist durch die impulsartige elektrische Haptik-Ansteuerung des Motors das Display aus einer Ausgangsposition ruckartig kurz hoch bzw. runter und wieder zurück in die Ausgangsposition bewegbar.

In einer optionalen Ausführungsform umfasst das Displaysystem einen Haptik-Aktuator. Der Haptik-Aktuator kann dabei zusätzlich oder anstelle des Motors eingerichtet sein, den elektrischen Haptik-Impuls auszugeben und/oder zu erfassen und eine Haptik-Ansteuerung des Motors auszulösen.

In einer Weiterbildung ist das Display eingerichtet, bei einer impulsartigen Haptik-Ansteuerung von einer Ausgangsposition zuerst in eine erste Richtung bewegbar zu sein und danach in eine weitere von der ersten unterschiedlichen Richtung bewegbar zu sein, wobei das Display eingerichtet ist, am Ende der impulsartigen Haptik-Ansteuerung wieder in die Ausgangsposition zurückzukehren.

Somit erfolgt die Bewegung des Displays während der Haptik-Ansteuerung zuerst in eine Richtung, beispielsweise nach oben, und sofort danach in eine andere Richtung, beispielsweise nach unten. Am Ende der Haptik-Ansteuerung ist das Display wieder in der Ausgangsposition angeordnet. Die erste Richtung und die zweite Richtung sind dabei in der Regel gegensätzlich zueinander ausgebildet.

In einer Weiterbildung ist der Haptik-Impuls stärker bzw. schwächer oder länger bzw. kürzer ausführbar. Durch einen jeweils stärkeren bzw. schwächeren oder längeren bzw. kürzeren Haptik-Impuls verändert sich die jeweilige Haptik-Ansteuerung, wodurch der Motor stärker oder weniger stark ansteuerbar ist. Durch die Veränderung des Haptik-Impulses ist ein Bewegungsweg des Displays einstellbar.

In einer Weiterbildung führt ein Teil der Aufrollbewegung, welche in das Display über den Motor eingeleitet wird, zu einer Bewegung des Displays und ein weiterer Teil der Aufrollbewegung verursacht eine Verformung des Displays nach außen bzw. führt zu einer größeren Reibung in der Führung. Die Aufteilung der Aufrollbewegung führt somit zu einem geänderten Wirkungsgrad, der abhängig vom Ausfahrweg des Displays ist.

In Ausgestaltung ist der Haptik-Impuls in Abhängigkeit eines Ausfahrweges des Displays variierbar. Dies bietet den Vorteil, dass der aufgrund der Mechanik und einer jeweiligen Lagerung des Displays unterschiedlichen Wahrnehmung einer haptischen Rückmeldung bei unterschiedlichen Ausfahrwegen des Displays entgegengewirkt wird.

Varrierbar bedeutet dabei, dass der Motor in Abhängigkeit des Ausfahrweges des Displays aus dem Gehäuse stärker oder weniger stark ansteuerbar ist. Variierbar sind zudem optional ein Weg bzw. ein Drehwinkel des Displays, ein Drehmoments des Displays sowie eine angepasste Haptik-Impulsform des Displays. Beispielsweise wird der Motor bei einem eingefahrenen Display mit einem höheren Drehmoment beaufschlagt, als bei einem zumindest zur Hälfte ausgefahrenen Display, um einen gleichbleibenden Ausfahrweg bzw. einen gleichbleibenden Effektivweg zu erzielen. Somit wird in Abhängigkeit des Ausfahrweges ein Motor unterschiedlich stark anfahrbar.

Durch die Variierbarkeit der Haptik-Ansteuerung kann beispielsweise einer weniger intensiv wahrgenommenen haptischen Rückmeldung, die auftritt, wenn das Display weiter eingerollt ist, entgegengewirkt werden. Auch kann einer zu stark wahrgenommenen haptischen Rückmeldung, die auftritt, wenn das Display weiter ausgerollt ist, entgegengewirkt werden.

In Ausgestaltung ist der Haptik-Impuls derart einstellbar, dass die haptische Rückmeldung des Displays unabhängig vom Ausfahrweg des Displays jeweils gleich ist. Dies bietet den Vorteil, dass trotz der Mechanik und der Lagerung des Displays in dem Gehäuse unabhängig von dem Ausfahrweg eine homogene haptische Rückmeldung an den Nutzer ausgegeben werden kann.

In weiterer Ausgestaltung weist der Haptik-Impuls einen Bewegungsweg zwischen 100µm und 140µm, insbesondere zwischen 110µm und 120µm, auf.

In weiterer Ausgestaltung beträgt eine Dauer des Haptik-Impulses zwischen 5ms und 20ms, insbesondere zwischen 10ms und 15ms.

In einer Weiterbildung umfasst das Displaysystem eine Recheneinheit, die eingerichtet ist, einen zu einem Ausfahrweg zugeordneten Haptik-Impuls zu speichern. In einer Ausführung ist der Haptik-Impuls stärker oder schwächer oder länger oder kürzer ausführbar. In einer weiteren Ausführungsform weist der Haptik-Impuls ein von dem Ausfahrweg abhängige Impulsform auf.

Ein jeweiliger Haptik-Impuls zu einem jeweiligen Ausfahrweg ist dabei in der Regel in der Recheneinheit hinterlegt und abrufbar. Beispielsweise ist ein jeweiliger Haptik-Impuls in einem Kennfeld hinterlegt.

In einer Weiterbildung ist die Elektronikeinheit eingerichtet, auf die Recheneinheit zuzugreifen und zumindest einen hinterlegten Haptik-Impuls zu beziehen bzw. auszulösen, wobei der jeweilige hinterlegte Haptik-Impuls eine impulsartige Haptik-Ansteuerung des Motors auslöst. Die Elektronikeinheit ist optional als Verstärkereinheit eingerichtet.

Die Erfindung ist anhand von Ausführungsformen in der Zeichnung schematisch dargestellt und wird unter Bezugnahme auf die Zeichnung weiter beschrieben, wobei die gleichen Komponenten mit gleichen Bezugsziffern gekennzeichnet sind. Es zeigt:
- Fig. 1a: eine grafische Seitansicht eines ersten Abschnittes einer Ausfahrbewegung eines Displays eines erfindungsgemäßen Displaysystems,
- Fig. 1b: eine grafische Seitansicht eines weiteren Abschnittes der - in Fig. 1a gezeigten - Ausfahrbewegung des Displays,
- Fig. 1c: eine grafische Seitansicht eines weiteren Abschnittes der - in Fig. 1a und 1b gezeigten - Ausfahrbewegung des Displays,
- Fig. 1d: eine grafische Seitansicht eines weiteren Abschnittes der - in Fig. 1a bis 1c gezeigten - Ausfahrbewegung des Displays,
- Fig. 2: eine grafische Seitansicht einer Ausführungsform eines erfindungsgemäßen Displays, mit ausgerolltem Display und Haptik-Impuls,
- Fig. 3a: eine Momentaufnahme einer Ausrollbewegung bzw. eines Ausfahrweges eines Displays eines erfindungsgemäßen Displaysystems,
- Fig. 3b: eine weitere Momentaufnahme der Ausrollbewegung bzw. des Ausfahrweges des - in Fig. 3a gezeigten - Displays des erfindungsgemäßen Displaysystems,
- Fig. 4: eine grafische Seitenansicht einer Ausführungsform des erfindungsgemäßen Displays, mit ausgerolltem Display, welches in einem Armaturenbrett in einem Fahrzeug angeordnet ist.

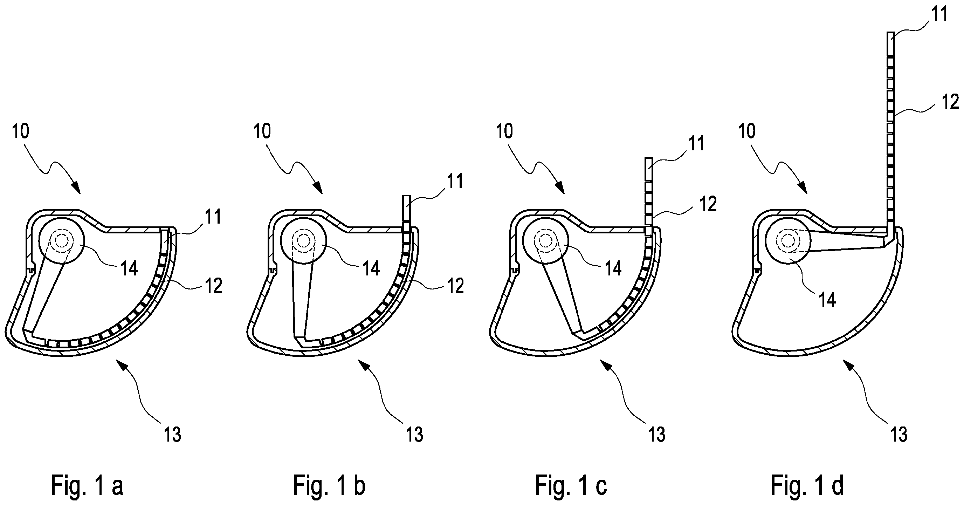

Figur 1a zeigt eine grafische Seitansicht eines ersten Abschnittes einer Ausfahrbewegung eines Displays 11 eines erfindungsgemäßen Displaysystems 10. Dabei ist in der Figur 1a das Display 11 in eingefahrenem Zustand dargestellt.

Gezeigt ist ein Gehäuse 13, in dem das Display 11 mit dem Touchscreen 12 mit Hilfe des Motors 14 eingefahren ist. Der Motor ist eingerichtet, eine Biegung bzw. Aufrollbewegung des Displays 11 zu erzeugen, wobei die Biegung bzw. die Aufrollbewegung beim Ausfahren des Displays 11 in eine translatorische Bewegung des Displays 11 umgewandelt wird. Der Motor 14 ist ferner eingerichtet, eine haptische Rückmeldung zu erzeugen.

Figur 1b zeigt eine grafische Seitansicht eines weiteren Abschnittes der - in Fig. 1a gezeigten - Ausfahrbewegung des Displays 11. Gezeigt ist das Gehäuse 13, in dem das Display 11 mit dem Touchscreen 12 mit Hilfe des Motors 14 zumindest teilweise eingefahren ist. Dabei ist das Display 11 nur ein wenig aus dem Gehäuse 13 herausgefahren. Ein geringer Ausfahrweg bzw. eine geringe Ausfahrbewegung des Displays 11 ist beispielsweise bei der Nutzung des Touchscreens 12 des Displays 11 zur Klimabedienung vorteilhaft.

Figur 1c zeigt eine grafische Seitansicht eines weiteren Abschnittes der - in Fig. 1a und 1b gezeigten - Ausfahrbewegung des Displays 11. Gezeigt ist das Gehäuse 13, in dem das Display 11 mit dem Touchscreen 12 mit Hilfe des Motors 14 zumindest teilweise eingefahren ist. Dabei ist das Display 11 etwas weiter aus dem Gehäuse 13 ausgefahren. Ein weiterer Ausfahrweg bzw. eine größere Ausfahrbewegung ist insbesondere bei der Nutzung des Touchscreens 12 des Displays 11 für eine Klima- und Radiobedienung vorteilhaft.

Figur 1d zeigt eine grafische Seitansicht eines weiteren Abschnittes der - in Fig. 1a bis 1c gezeigten - Ausfahrbewegung des Displays 11. Gezeigt ist das Gehäuse 13, aus dem das Display 11 mit dem Touchscreen 12 mit Hilfe des Motors 14 vollständig ausgefahren ist. Ein vollständig ausgefahrenes Display 11 ist insbesondere für die Wiedergabe von Filmen vorteilhaft.

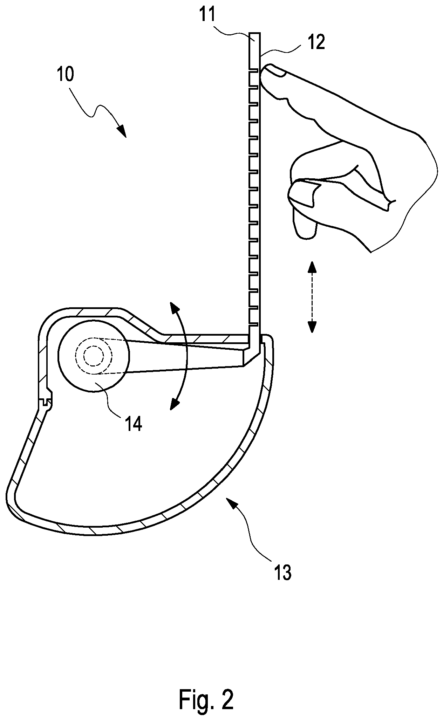

Figur 2 zeigt eine grafische Seitansicht einer Ausführungsform eines erfindungsgemäßen Displays 11, mit ausgerolltem Display 11 und dargestelltem Haptik-Impuls. Gezeigt ist das Gehäuse 13, in dem das Display 11 mit dem Touchscreen 12 mit Hilfe des Motors 14 vollständig ausgefahren ist.

Dabei führt der Motor 14 aufgrund des Haptik-Impulses - wie durch den Pfeil dargestellt - eine Drehbewegung aus. Dabei ist der Motor 14 eingerichtet, die Biegung bzw. auf Aufrollbewegung des Displays beim Ausfahren des Displays in eine transnasale Bewegung des Displays umzuwandeln. Das bedeutet, dass das Display 11 durch den Motor 14 von einer gebogenen Form in eine gerade Form überführt wird.

Durch eine Berührung durch einen Nutzer wird - wie durch den gestrichelten Pfeil dargestellt - ein Haptik- Impuls ausgelöst. Der Haptik-Impuls löst eine impulsartige Haptik-Ansteuerung des Motors 14 aus. Der durch die Berührung ausgelöste Haptik-Impuls ist als elektrischer Impuls ausgebildet, der eingerichtet ist, eine Haptik-Ansteuerung auszulösen, die das Display 11 ruckartig kurz hoch bzw. runter und wieder zurück in eine Ausgangsposition bewegt.

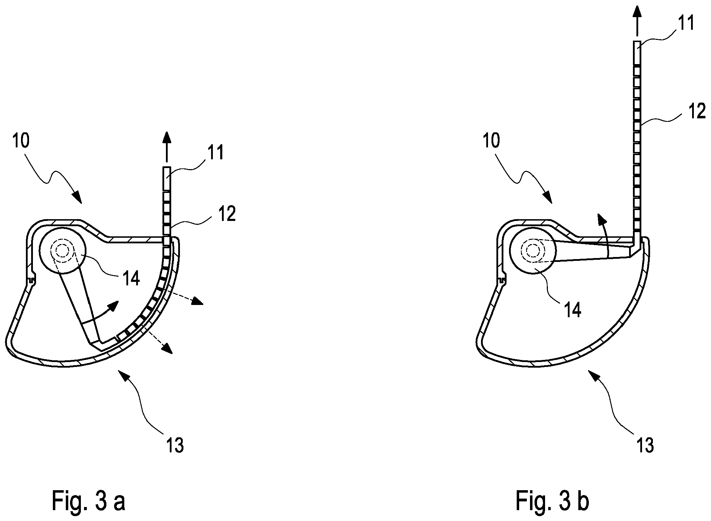

Figur 3a zeigt eine Momentaufnahme einer Ausrollbewegung bzw. eines Ausfahrweges eines Displays 11 eines erfindungsgemäßen Displaysystems 10. Dabei ist - wie durch Pfeile dargestellt - gezeigt, dass ein Teil der Ausrollbewegung des Motors, die in das Display 11 mit dem Touchscreen 12 über den Motor eingeleitet wird, und die eine Drehbewegung darstellt, zu einer Bewegung des Displays 11 führt. Ein weiterer Teil der eingebrachten Ausrollbewegung durch den Motor 14 verursacht - wie durch gestrichelte Pfeile dargestellt - eine Verformung des Displays 11 nach außen in Richtung des Gehäuses 13 bzw. führt zu einer größeren Reibung in einer - nicht gezeigten - Führung des Gehäuses 13. Bei einer - wie in Fig. 3a gezeigten - Position des Displays 11 ist dabei ein höheres Drehmoment des Motors notwendig, als bei einem zumindest zur Hälfte ausgefahrenen Display, um einen gleichbleibenden Ausfahrweg bzw. einen gleichbleibenden Effektivweg zu erzielen.

Figur 3b zeigt eine weitere Momentaufnahme der Ausrollbewegung bzw. des Ausfahrweges des - in Fig. 3a gezeigten - Displays 11 des erfindungsgemäßen Displaysystems 10. Dabei ist - wie durch Pfeile dargestellt - gezeigt, dass durch die Ausfahrbewegung des Motors 14 das Display 11 mit dem Touchscreen 12 aus dem Gehäuse 13 herausbewegt wird, wobei die Biegung des Displays 11 durch die Umwandlung der Ausrollbewegung in eine translatorische Bewegung in eine begradigte bzw. lineare Ausführung des Displays 11 wechselt.

In der Figur 3b sind zwei Bewegungspfeile dargestellt. Zum einen ist die Drehbewegung des Motors 14 dargestellt und zum anderen die translatorische Ausdehnung des Displays 11.

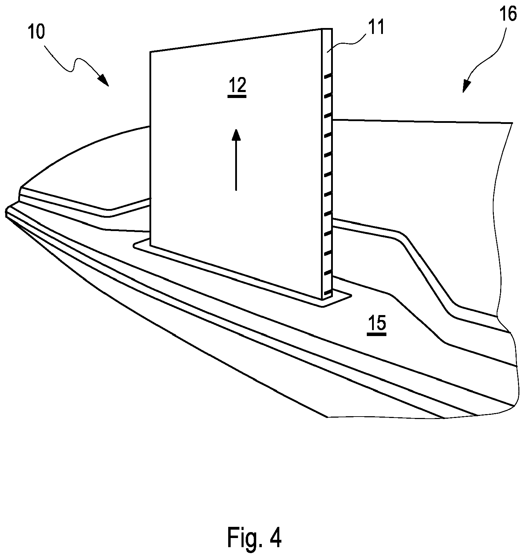

Figur 4 zeigt eine grafische Seitenansicht einer Ausführungsform des erfindungsgemäßen Displaysystems 10, mit ausgerolltem Display 11, welches in einem Armaturenbrett 15 in einem Fahrzeug 16 angeordnet ist. Dabei ist - wie durch einen Pfeil gezeigt - die translatorische Bewegung des ausgerollten Displays 11 mit dem Touchscreen 12 dargestellt.

### Bezugszeichenliste

- 10: Displaysystem
- 11: Display
- 12: Touchscreen
- 13: Gehäuse
- 14: Motor
- 15: Armaturenbrett
- 16: Fahrzeug

## Patentansprüche

1. Displaysystem (10) umfassend ein Display (11) mit einem flexiblen Touchscreen (12), ein Gehäuse (13) und einen Motor (14) mit einer elektrischen Ansteuerung, wobei das Display (11) über die elektrische Ansteuerung des Motors (14) aus dem Gehäuse (13) ausfahrbar ist, wobei der Motor (14) eingerichtet ist, eine Biegung bzw. Aufrollbewegung des Displays (11) zu erzeugen, wobei die Biegung bzw. die Aufrollbewegung beim Ausfahren des Displays (11) in eine translatorische Bewegung des Displays (11) umgewandelt wird und wobei der Motor (14) eingerichtet ist, eine haptische Rückmeldung zu erzeugen, wobei das Displaysystem (10) eine Elektronikeinheit umfasst, die eingerichtet ist, eine Berührung des Touchscreens (12) zu erfassen und basierend auf der erfassten Berührung einen elektrischen Haptik-Impuls auszulösen, **dadurch gekennzeichnet, dass** der Haptik-Impuls eine impulsartige Haptik-Ansteuerung des Motors (14) auslöst.

2. Displaysystem (10) nach Anspruch 1, **dadurch gekennzeichnet, dass** das Display (11) eingerichtet ist, bei der impulsartigen Haptik-Ansteuerung von einer Ausgangsposition zuerst in eine erste Richtung bewegbar zu sein und danach in eine weitere zu der ersten unterschiedlichen Richtung bewegbar zu sein, wobei das Display (11) eingerichtet ist, am Ende der impulsartigen Haptik-Ansteuerung wieder in die Ausgangsposition zurückzukehren.

3. Displaysystem (10) nach Anspruch 1 oder 2, **dadurch gekennzeichnet, dass** der Haptik-Impuls stärker bzw. schwächer oder länger bzw. kürzer ausführbar ist.

4. Displaysystem (10) nach einem der voranstehenden Ansprüche, **dadurch gekennzeichnet, dass** ein Teil der Aufrollbewegung, welche in das Display (11) über den Motor (14) eingeleitet wird, zu einer Bewegung des Displays (11) führt und ein weiterer Teil der Aufrollbewegung eine Verformung des Displays (11) nach außen verursacht bzw. zu einer größeren Reibung in der Führung führt.

5. Displaysystem (10) nach Anspruch 1, **dadurch gekennzeichnet, dass** der Haptik-Impuls in Abhängigkeit eines Ausfahrweges des Displays (11) variierbar ist.

6. Displaysystem (10) nach Anspruch 5, **dadurch gekennzeichnet, dass** der Haptik-Impuls derart einstellbar ist, dass die haptische Rückmeldung des Displays (11) unabhängig vom Ausfahrweg des Displays (11) jeweils gleich ist.

7. Displaysystem (10) nach einem der voranstehenden Ansprüche, **dadurch gekennzeichnet, dass** der Haptik-Impuls einen Bewegungsweg zwischen 100µm und 140µm, insbesondere zwischen 110µm und 120µm, aufweist.

8. Displaysystem (10) nach einem der voranstehenden Ansprüche, **dadurch gekennzeichnet, dass** eine Dauer des Haptik-Impulses zwischen 5ms und 20ms, insbesondere zwischen 10ms und 15ms, beträgt.

9. Displaysystem (10) nach einem der voranstehenden Ansprüche, **dadurch gekennzeichnet, dass** das Displaysystem (10) eine Recheneinheit umfasst, die eingerichtet ist, einen einem Ausfahrweg des Displays (11) zugeordneten Haptik-Impuls zu speichern.

10. Displaysystem (10) nach Anspruch 9, **dadurch gekennzeichnet, dass** die Elektronikeinheit eingerichtet ist, auf die Recheneinheit zuzugreifen und zumindest einen hinterlegten Haptik-Impuls zu beziehen bzw. auszulösen, wobei der hinterlegte Haptik-Impuls eine impulsartige Haptik-Ansteuerung des Motors (14) auslöst.

## Claims

1. A display system (10) comprising a display (11) with a flexible touchscreen (12), a housing (13), and a motor (14) with an electric actuator, wherein the display can be extended out of the housing by electrical actuation of the motor (14), wherein the motor (14) is configured for causing a bending or roll-out movement of the display (11), wherein during extension of the display (11), the bending or roll-out movement is converted into a translational movement of the display (11), and wherein the motor (14) is configured for generating a haptic feedback, wherein the display system (10) comprises an electronic unit configured to detect a touching of the touchscreen (12), and to initiate an electrical haptic pulse based on the detected touch, **characterized in that** the haptic impulse initiates a pulse-like haptic actuation of the motor (14).

2. The display system (10) according to claim 1, **characterized in that** the display (11) is designed to be movable when the pulse-like haptic actuation occurs, first from a starting position in a first direction, and subsequently to be movable in another direction different from the first, wherein at the end of pulse-like haptic actuation, the display (11) is designed to again return to the starting position.

3. The display system (10) according to claim 1 or 2, **characterized in that** the haptic pulse can be stronger or weaker, or longer or shorter.

4. The display system (10) according to any one of the preceding claims, **characterized in that** one part of the roll-out movement induced in the display (11) by the motor (14) results in a movement of the display (11) and another part of the roll-out movement results in a deformation of the display (11) outwards and in increased running friction.

5. The display system (10) according to claim 1, **characterized in that** the haptic pulse can be varied depending on an extension path of the display (11).

6. The display system (10) according to claim 5, **characterized in that** the haptic pulse can be set such that the haptic feedback of the display (11) is the same in each case, independent of the extension path of the display (11).

7. The display system (10) according to any one of the preceding claims, **characterized in that** the haptic pulse has a movement path between 100µm and 140µm, particularly between 110µm and 120µm.

8. The display system (10) according to any one of the preceding claims, **characterized in that** a duration of the haptic pulse is between 5ms and 20ms, particularly between 10ms and 15ms.

9. The display system (10) according to any one of the preceding claims, **characterized in that** the display system (10) comprises a computing unit designed to store a haptic pulse assigned to an extension path of the display (11).

10. The display system (10) according to claim 9, **characterized in that** the electronic unit is designed to access the computing unit and to receive or trigger a stored haptic pulse, wherein the stored haptic pulse triggers a pulse-like haptic actuation of the motor (14).

## Revendications

1. Système d'affichage (10) comprenant un écran (11) doté d'une dalle tactile flexible (12), d'un boîtier (13) et d'un moteur (14) à commande électrique, l'écran (11) pouvant être sorti du boîtier (13) par la commande électrique du moteur (14), le moteur (14) étant conçu pour produire une flexion ou un mouvement de déroulement de l'écran (11), la flexion ou le mouvement de déroulement étant transformé(e) en un mouvement de translation de l'écran (11) lors de la sortie de l'écran (11) et le moteur (14) étant conçu pour générer une rétroaction haptique, le système d'affichage (10) comprenant une unité électronique conçue pour détecter un contact avec la dalle tactile (12) et pour déclencher une impulsion haptique électrique sur la base du contact détecté, **caractérisé en ce que** l'impulsion haptique déclenche une commande haptique impulsionnelle du moteur (14).

2. Système d'affichage (10) selon la revendication 1, **caractérisé en ce que** l'écran (11) est conçu pour être déplacé, lorsqu'il est commandé par l'impulsion haptique, d'une position de départ d'abord dans une première direction et ensuite dans une autre direction différente de la première, l'écran (11) étant conçu pour revenir à la position de départ à la fin du pilotage par impulsion haptique.

3. Système d'affichage (10) selon la revendication 1 ou 2, **caractérisé en ce que** l'impulsion haptique peut être exécutée de manière plus forte ou plus faible ou plus longue ou plus courte.

4. Système d'affichage (10) selon l'une des revendications précédentes, **caractérisé en ce qu'**une partie du mouvement de déroulement, qui est initié dans l'écran (11) par le moteur (14), entraîne un mouvement de l'écran (11) et une autre partie du mouvement de déroulement provoque une déformation de l'écran (11) vers l'extérieur entraînant un frottement plus fort dans le guidage.

5. Système d'affichage (10) selon la revendication 1, **caractérisé en ce que** l'impulsion haptique peut être modifiée en fonction d'un trajet de sortie de l'écran (11).

6. Système d'affichage (10) selon la revendication 5, **caractérisé en ce que** l'impulsion haptique est réglable de telle sorte que la rétroaction haptique de l'écran (11) est à chaque fois la même, indépendamment du trajet de sortie de l'écran (11).

7. Système d'affichage (10) selon l'une des revendications précédentes, **caractérisé en ce que** l'impulsion haptique présente un trajet de déplacement compris entre 100 µm et 140 µm, en particulier entre 110 µm et 120 µm.

8. Système d'affichage (10) selon l'une des revendications précédentes, **caractérisé en ce qu'**une durée de l'impulsion haptique est comprise entre 5 ms et 20 ms, en particulier entre 10 ms et 15 ms.

9. Système d'affichage (10) selon l'une des revendications précédentes, **caractérisé en ce que** le système d'affichage (10) comprend une unité de calcul qui est conçue pour mémoriser une impulsion haptique associée à un trajet de sortie de l'écran (11).

10. Système d'affichage (10) selon la revendication 9, **caractérisé en ce que** l'unité électronique est conçue pour accéder à l'unité de calcul et pour obtenir ou déclencher au moins une impulsion haptique mémorisée, l'impulsion haptique mémorisée déclenchant une commande haptique impulsionnelle du moteur (14).
